# FASCICULE DE BREVET EUROPEEN

(11) **EP 0 923 977 B1**
(45) Date de publication et mention de la délivrance du brevet: **31.03.2004**
(21) Numéro de dépôt: 98403175.7
(22) Date de dépôt: 16.12.1998
(51) Int. Cl.: B01D 53/047, B01D 53/04

(54) **Procédé de séparation gazeuse par adsorption avec production a débit variable**
Verfahren zur Gastrennung durch Adsorption mit variabler Produktionsrate
Process for gas separation using adsorption with variable production rate

(30) Priorité: 18.12.1997 FR 9716066
(43) Date de publication de la demande: 23.06.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Nagamura, Takashi, c/o L'Air Liquide SA, 75321 Paris Cedex 07 (FR); Monereau, Christian, 75011 Paris (FR); Derive, Nathalie, 75010 Paris (FR); Rouge, Dominique, 92240 Malakoff (FR); Montfort, Christophe, 78530 Buc (FR); Calviac, Jean-Claude, 94340 Joinville-le-Pont (FR)
(74) Mandataire: Conan, Philippe Claude

(56) Documents cités:
- EP-A- 0 458 350
- EP-A- 0 689 862
- DE-A- 3 306 371
- GB-A- 2 259 871
- US-A- 4 197 096
- US-A- 4 561 865
- US-A- 4 693 730

## Description

La présente invention est relative à un procédé de traitement d'un mélange gazeux comprenant une réduction du débit de production temporaire, par adsorption à variation de pression (Pressure Swing Adsorption ou PSA), du type dans lequel on utilise au moins un adsorbeur, dans lequel on effectue, pour une production nominale donnée, un cycle comprenant les étapes successives suivantes :
- une phase de production par circulation du mélange dans l'adsorbeur dans un sens dit co-courant et récupération d'une fraction enrichie en composés les moins adsorbables, phase en cours de laquelle la pression maximale PM du cycle est atteinte,
- une phase de régénération comportant au moins une étape de dépressurisation au cours de laquelle est atteinte la pression minimale Pm du cycle, et
- une phase de repressurisation de l'adsorbeur jusqu'à la pression initiale de la phase de production,
l'adsorbeur étant susceptible d'être mis en oeuvre avec réduction du débit de production.

L'invention s'applique en particulier à la production d'oxygène impur, ayant typiquement une pureté de l'ordre de 90 à 95%, à partir d'air atmosphérique. Ce gaz de production sera appelé « oxygène » dans la suite.

Les pressions dont il est question ici sont des pressions absolues.

Les cycles d'adsorption précités sont dits transatmosphériques. Ils sont mis en oeuvre sur des unités comportant généralement un ou deux adsorbeurs, un compresseur ou une soufflante d'alimentation en air, une pompe à vide et, si nécessaire, une capacité de stockage d'oxygène pour rendre le débit de production uniforme. La soufflante et la pompe sont généralement du type volumétrique « Roots » et peuvent être réunies en une seule machine dans le cas d'une unité à un seul adsorbeur. Dans un but d'économie et de fiabilité, cette ou ces machine(s) ne comporte(nt) généralement aucun variateur de vitesse, et l'invention se place dans cette hypothèse, et généralement dans celle d'une pureté sensiblement constante de l'oxygène produit.

Les principaux paramètres du cycle, en particulier les niveaux des pressions maximale ou haute PM et minimale ou basse Pm, sont déterminés lors de la conception de l'unité de façon à optimiser le coût de la production d'oxygène pour un débit nominal donné de production. En fonction des divers facteurs économiques entrant en compte dans cette optimisation, le ratio de pression PM/Pm peut aller d'environ 2,0 jusqu'à des valeurs de 6 à 8.

On expliquera ci-après l'invention en se référant à une unité à deux adsorbeurs.

Les deux machines traitant des débits constants, si la demande en oxygène diminue par rapport à la production nominale et les durées des étapes demeurent inchangées, l'influence sur les pressions des adsorbeurs est faible puisque l'oxygène produit ne représente que 10% environ du débit d'air traité. Par suite, l'énergie consommée par les machines reste sensiblement constante, de sorte que l'énergie spécifique Eₛ, qui est l'énergie consommée par m³ d'oxygène produit, augmente, de façon à peu près inversement proportionnelle au débit.

Par exemple, si pour la production nominale de 100 l'énergie spécifique Es est de 100, pour une production de 80, on aura Es = 125 environ, et pour une production de 50, ou aura Eₛ = 200 environ.

Ce mode de fonctionnement n'est retenu que si l'unité en question fonctionne pratiquement toujours à pleine capacité, ou si le prix de l'énergie est très faible.

De plus, dans cette hypothèse, la pureté de l'oxygène produit s'améliore lorsque la demande diminue.

Pour améliorer la consommation énergétique en marche réduite, on a proposé pour ce type de cycle (EP-A-0 458 350) d'ajouter au cycle de base un temps d'attente ou temps mort au cours duquel les machines fonctionnent à vide, c'est-à-dire ont leurs entrées et leurs sorties en communication avec l'atmosphère. Le cycle est allongé de la durée du temps d'attente, ce qui réduit le nombre de cycles par heure et donc la production d'oxygène de l'unité.

Comme les machines ont une faible consommation d'énergie pendant les temps d'attente, on obtient ainsi une énergie spécifique Eₛ sensiblement diminuée en marche réduite par rapport au cas précédent.

Ainsi, avec les hypothèses numériques précitées, pour une production de 80, Eₛ = 107 à 112, et pour une production de 50, Eₛ = 120 à 130.

Cependant, cette énergie spécifique reste supérieure à l'énergie spécifique nominale à cause de la consommation supplémentaire des machines lors de leur fonctionnement à vide prolongé.

Le document EP-A-0 689 862, au nom de la Demanderesse, décrit un procédé où, lors d'une réduction du débit de production, on élève la pression moyenne d'aspiration de la pompe à vide sur toute la durée du cycle.

L'invention a pour but de fournir un procédé qui, sans investissement supplémentaire, permette d'obtenir une énergie spécifique inférieure ou égale à l'énergie spécifique nominale sur une large plage de production en-dessous de la marche nominale.

A cet effet, l'invention a pour objet un procédé du type précité, caractérisé en ce que, lors de cette réduction du débit de production, on abaisse la pression maximale PM et on réduit le rapport PM/Pm.

Le procédé suivant l'invention peut comporter une ou plusieurs des caractéristiques suivantes
- lors de cette réduction du débit de production, on diminue la durée d'une étape de recompression de l'adsorbeur avec le mélange de façon à diminuer la pression PM ;
- lors de cette réduction du débit de production, on diminue la durée de ladite étape de dépressurisation de façon à remonter la pression Pm ;
- lors de cette réduction du débit de production, on maintient inchangées les durées des autres étapes du cycle ;
- lors de cette réduction du débit de production, on allonge la durée d'une étape de première recompression à contre-courant de la phase de repressurisation et/ou la durée d'une étape de première décompression à co-courant de la phase de régénération ;
- lors de cette réduction du débit de production, on allonge la durée de l'étape de première recompression à contre-courant et celle de l'étape de première décompression à co-courant, qui sont deux étapes concomitantes réalisées par équilibrage total ou partiel de pressions entre deux adsorbeurs ;
- lors de cette réduction du débit de production, on ajoute au cycle au moins un temps mort au cours duquel l'adsorbeur est isolé ;
- on prévoit le temps mort après une étape de première recompression à co-courant de la phase de repressurisation, et/ou après une étape de première décompression à co-courant de la phase de regénération ;
- le cycle comprend successivement, au cours de la phase de régénération, une étape de première décompression à co-courant, une étape de deuxième décompression à contre-courant jusqu'à la pression basse, et une étape d'élution à contre-courant par du gaz de production, avec pompage simultané;
- le cycle comprend successivement, au cours de la phase de régénération, une étape de première décompression à co-courant, une étape de deuxième décompression à contre-courant, et une étape d'élution à contre-courant par du gaz de production, avec pompage simultané, au cours de laquelle est atteinte la pression Pm;
- le cycle comprend successivement, au cours de la phase de repressurisation, une étape de première recompression à contre-courant et une étape de recompression finale comportant au moins l'introduction à co-courant dudit mélange;
- PM est sensiblement supérieure à la pression atmosphérique, notamment comprise entre 1,2 et 2 bars et plus particulièrement entre 1,35 et 1,65 bar;
- Pm est comprise dans la plage 0,20 à 0,65 bar et plus particulièrement dans la plage 0,3 à 0,45 bars abs;
- le gaz de production est de l'oxygène dont la pureté est sensiblement la même pour le débit nominal de production et pour le débit réduit de production.

Des exemples de mise en oeuvre de l'invention, donnés à titre illustratif mais non limitatif, vont maintenant être décrits en regard des dessins annexés, sur lesquels :
- la Figure 1 représente schématiquement une unité à deux adsorbeurs adaptée pour la mise en oeuvre du procédé conforme à l'invention;
- la Figure 2 est un diagramme qui illustre un cycle typique mis en oeuvre par cette unité pour la production nominale;
- la Figure 3 est un diagramme analogue qui illustre le cycle modifié pour une production réduite;
- les Figures 4 à 6 sont des diagrammes analogues relatifs à diverses variantes de cycle modifié pour une production réduite; et
- la Figure 7 est un diagramme qui montre l'économie d'énergie que l'invention permet d'obtenir.

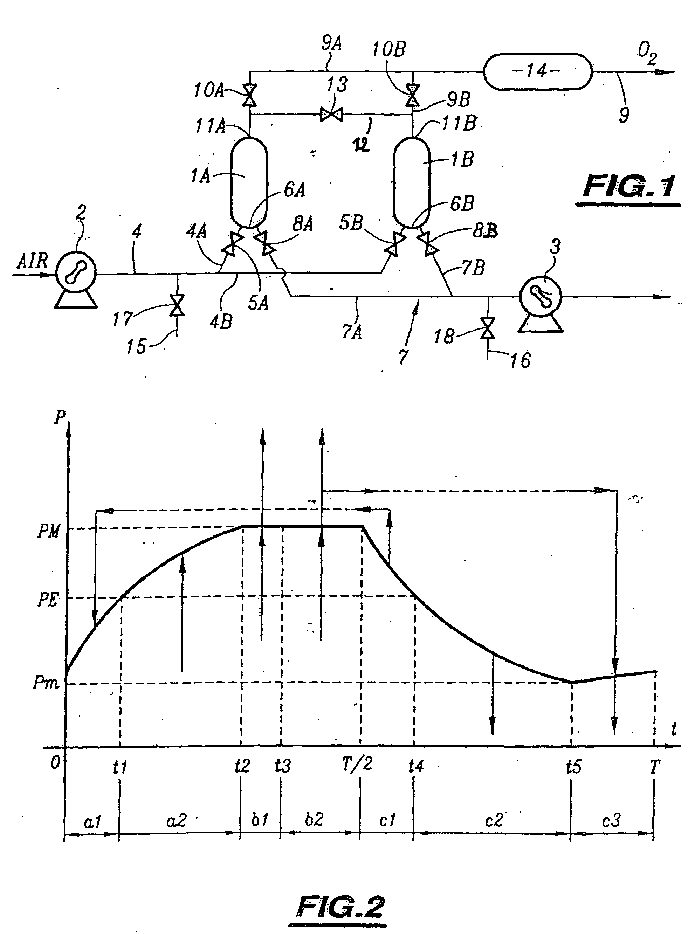

L'installation représentée à la Figure 1 est destinée à produire de l'air enrichi en oxygène, ou oxygène impur (appelé "oxygène" dans un but de simplicité), à une teneur de préférence comprise entre 90 et 95% environ, à partir d'air atmosphérique.

L'installation comprend essentiellement deux adsorbeurs 1A et 1 B, un compresseur ou une soufflante 2, une pompe à vide 3 et un ensemble de conduites et de vannes, ainsi que des moyens de commande et de régulation non représentés, adaptés pour mettre en oeuvre le cycle illustré sur les Figures 2 à 6. Le compresseur et la pompe sont des machines volumétriques du type "Roots", et tournent en permanence à vitesse constante.

On a schématisé sur la Figure 1 :
- une conduite 4 d'alimentation en air atmosphérique qui part du refoulement du compresseur 2 et qui se divise en deux branches 4A, 4B munies de vannes d'alimentation respectives 5A, 5B et reliées respectivement à l'entrée inférieure 6A, 6B des adsorbeurs;
- une conduite 7 de purge/élution qui se divise en deux branches 7A, 7B munies de vannes de purge/élution 8A, 8B et partant respectivement des entrées 6A, 6B des adsorbeurs;
- une conduite 9 de production qui se divise en deux branches 9A, 9B munies de vannes de production 10A, 10B et partant respectivement des sorties supérieures 11 A, 11B des adsorbeurs; et
- une conduite 12 d'équilibrage/élution qui relie directement entre elles les sorties 11A et 11B et qui est munie d'une vanne d'équilibrage/élution 13.

Une capacité-tampon 14 est montée dans la conduite 9.

L'aspiration du compresseur 2 et le refoulement de la pompe à vide 3 sont en communication avec l'atmosphère environnante. Les adsorbeurs 1 A à 1 B contiennent chacun au moins un lit d'un adsorbant adapté pour adsorber sélectivement l'azote de l'air, qui est dans cet exemple un tamis moléculaire de type CaA ou une zéolite échangée au lithium. De plus, des by-pass 15 et 16, munis d'une vanne respective 17, 18, sont respectivement piqués sur les conduites 4 et 7, juste en aval du compresseur 2 et juste en amont de la pompe 3. Ces by-pass débouchent dans l'atmosphère environnante.

Au moyen de l'installation ainsi décrite, on met en oeuvre, à titre d'exemple non limitatif, un cycle d'adsorption à variation de pression transatmosphérique tel qu'illustré sur la Figure 2.

Sur cette Figure 2, où les temps t sont portés en abscisses et les pressions absolues P en ordonnées, les traits orientés par des flèches indiquent les mouvements et destinations des courants gazeux. Lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le sens du courant dans l'adsorbeur est à co-courant. Si la flèche dirigée vers le haut est située au-dessous du trait indiquant la pression dans l'adsorbeur, le courant pénètre dans l'adsorbeur par l'extrémité d'entrée de l'absorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter par l'adsorbeur considéré et du gaz soutiré de ce même adsorbeur en phase d'adsorption. Lorsqu'une flèche est dans le sens des ordonnées décroissantes (vers le bas du diagramme), le sens du courant dans l'adsorbeur est à contre-courant. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase d'adsorption.

Dans l'exemple considéré, la pression haute PM du cycle est nettement supérieure à la pression atmosphérique et choisie typiquement égale à 1,40 bar, tandis que la pression basse Pm du cycle est nettement inférieure à la pression atmosphérique et est choisie typiquement égale à 0,4 bar.

Le cycle sera décrit ci-dessous pour un adsorbeur, à savoir l'adsorbeur 1A, et pour le débit nominal de production d'oxygène. L'autre adsorbeur 1 B suit un cycle identique mais décalé dans le temps d'une demi-période T/2.

Le cycle est constitué des étapes successives suivantes :
(a) Phase de recompression :
   (a1) De t=0 à t1, une étape de première recompression à contre-courant par équilibrage de pressions avec l'autre adsorbeur en cours d'étape (c1) de première décompression à co-courant décrite plus loin. A l'instant t1, la pression est remontée à une valeur intermédiaire PE.
   (a2) De t1 à t2, une étape de recompression finale à co-courant au moyen d'air provenant du compresseur. A l'instant t2, la pression est voisine de la valeur maximale PM.
(b) Phase de production (à peu près isobare):
   (b1) De t2 à t3, une première étape d'adsorption à co-courant, dans laquelle l'air à traiter est introduit via la conduite 4 à l'entrée de l'adsorbeur au voisinage de la pression PM et circule à co-courant à travers celui-ci. L'oxygène de production est soutiré à la sortie de l'adsorbeur et envoyé dans la conduite de production 9.
   (b2) De t3 à T/2, une seconde étape d'adsorption à co-courant, qui ne diffère de la précédente que par le fait qu'une fraction de l'oxygène produit est prélevée à la sortie de l'adsorbeur et est envoyée à contre-courant dans l'autre adsorbeur en phase de purge/élution (c3) décrite plus loin.
(c) Phase de régénération de l'adsorbant :
   (c1) De T/2 à t4, une étape de première décompression à co-courant par équilibrage de pressions avec l'autre adsorbeur en phase de première recompression à contre-courant (a1) décrite ci-dessus. Au cours de cette étape, la pression de l'adsorbeur tombe de PM à la valeur intermédiaire PE.
   (c2) De t4 à t5, une étape de purge à contre-courant avec mise sous vide. Au cours de cette étape, l'entrée de l'adsorbeur est reliée à la pompe à vide, qui amène la pression à la pression basse du cycle Pm.
   (c3) De t5 à T, une phase de purge/élution au voisinage de la pression basse PM. Au cours de cette étape, l'entrée de l'adsorbeur est encore reliée à la pompe à vide, et, simultanément, sa sortie est reliée à celle de l'autre adsorbeur, qui se trouve en seconde étape d'adsorption (b2).Comme illustré sur la Figure 2, au cours de cette étape (c3), la pression remonte légèrement au-dessus de la pression basse (Pm).

Dans l'exemple considéré, les durées des différentes étapes sont :
T(a1) = 7 s
T(a2) = 15 s
T(b1) = 5 s
T(b2) = 10 s
T(c1) = 7 s
T(c2) = 20 s
T(c3) = 10 s

La durée du cycle est donc T = 74 s.

Pour simplifier le graphique du cycle, on a supposé un équilibrage total des pressions dans les étapes (a1) et (c1) ainsi qu'une production isobare. Cependant, en variante, l'équilibrage des pressions peut n'être que partiel, ce qui correspondrait à PE(c1) > PE(a1). De plus, la phase de production peut commencer à une pression inférieure à PM. De même, l'élution peut s'effectuer à pression décroissante et Pm être obtenue durant cette étape.

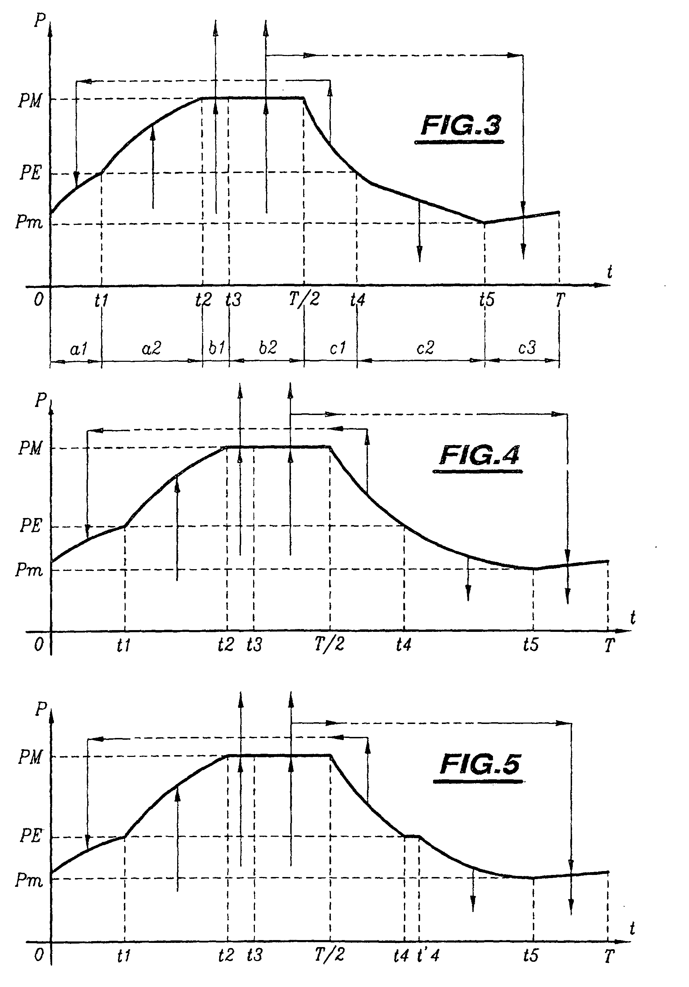

La Figure 3 illustre une modification du cycle de la Figure 2 pour un débit de production réduit. Cette modification consiste uniquement en un raccourcissement des étapes (a2), (b1) et (c2) correspondant à la montée en pression finale, à la première étape d'adsorption et à la décompression finale de l'adsorbeur. Dans cet exemple, les durées correspondantes deviennent t(a2) = 13,5 s, t(b1) = 3,5 s et t(c2) = 17 s. La durée du cycle est par conséquent réduit à T = 68 s.

En variante, il serait possible de conserver constante la durée de l'étape (b1).

Du fait du raccourcissement de l'étape (a2), la pression haute PM atteinte est réduite à 1,28 bars. De même, le raccourcissement de l'étape (c2) remonte la pression basse Pm à 0,43 bar. Par conséquent, le rapport PM/Pm passe de 1,40/0,40 = 3,5 à une valeur inférieure 1,28/0,43 = 2,98.

Ceci a pour effet de rendre l'adsorbeur moins productif, puisque la pression d'adsorption est réduite et la pression de régénération augmentée. Cette diminution de productivité est choisie pour équilibrer d'une part la baisse de production, et d'autre part l'augmentation du nombre de cycles par heure, et par suite pour obtenir une production d'oxygène ayant une pureté inchangée.

Dans le même temps, l'énergie consommée par cycle diminue sensiblement puisque les niveaux de pression sont plus favorables. Globalement, l'énergie spécifique E_{S} est sensiblement maintenue en marche réduite.

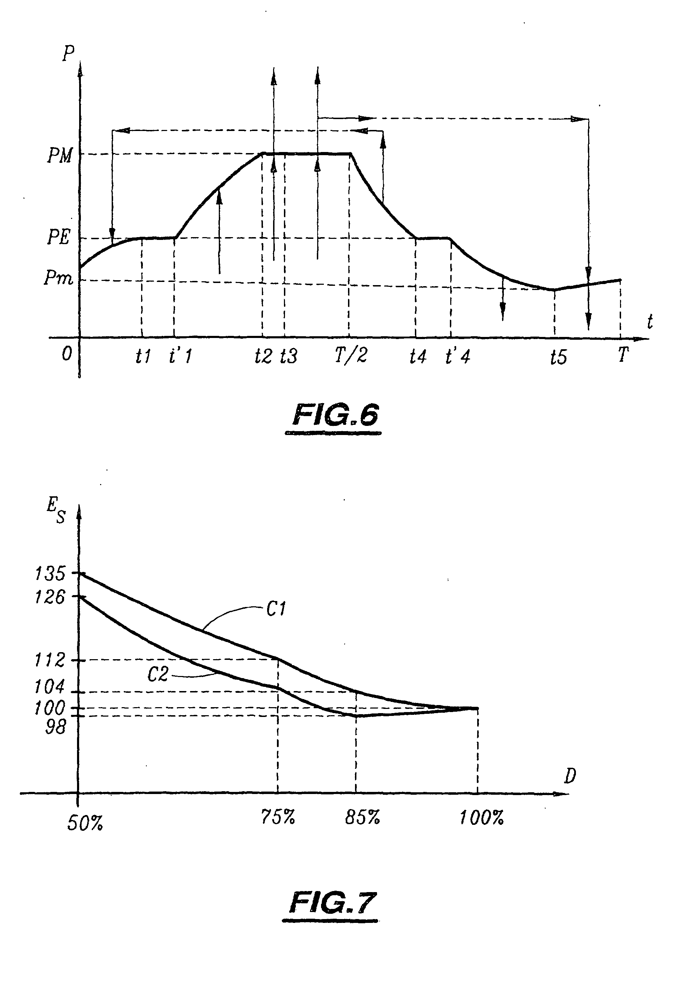

La variante de cycle de la Figure 4 ne diffère de la précédente que par le fait que les étapes d'équilibrage de pressions (a1) et (c1) sont allongées toutes les deux d'une même durée de manière à revenir à la durée initiale du cycle T = 74 s. Ainsi, t(a1) = t(c1) = 10s.

Les pressions extrêmes restent PM = 1,28 bar et Pm = 0,43 bar.

On obtient ainsi un point de fonctionnement avec une production égale à 85% du débit nominal et une énergie spécifique inférieure de 2% à l'énergie spécifique nominale.

On explique cette amélioration par l'effet bénéfique du rallongement de l'étape d'équilibrage, durant laquelle les effets cinétiques sont importants.

L'allongement des étapes (a1) et (c1) peut être obtenu en utilisant comme vanne 13 une vanne à ouverture commandée suivant une rampe progressive programmable, tel que décrit par exemple dans le document FR-A-2 756 752.

La diminution de la pression PM, suivant la méthode des Figures 3 et 4, est en pratique limitée à la pression de fourniture demandée sur la conduite 9, et donc à une valeur supérieure à la pression atmosphérique.

Si la baisse de production est importante, en pratique de plus de 20% pour les pressions prises comme exemple, on continue à réduire le rapport PM/Pm, mais en maintenant PM constant et en relevant Pm.

Pour cela, on peut continuer de diminuer la durée de l'étape de décompression finale (c2).

En variante ou en supplément, on peut également ajouter un temps mort ou temps d'attente entre les étapes (c1) et (c2) et éventuellement entre les étapes (a1) et (b1). Pour chacun de ces temps morts, l'adsorbeur est isolé et la machine correspondante est mise en fonctionnement à vide par ouverture de la vanne 17 ou 18 associée.

Ainsi, dans l'exemple de la Figure 5, la durée t(c2) est diminuée de 2 s, et un temps mort ΔT = t'4-t4 = 2s est intercalé entre les étapes (c1) et (c2). La pression Pm est alors 0,45 bar.

Dans l'exemple de la Figure 6, la seule modification par rapport au cycle de la Figure 4 a consisté à introduire deux temps morts (t1, t'1) et (t4, t'4) entre les étapes (a1) et (a2) d'une part, (b1) et (b2) d'autre part. Le cycle est donc allongé de la somme des durées des deux temps morts, et la pression Pm reste à la valeur de 0,43 bar du cycle de la Figure 4.

La Figure 7 illustre la variation d'énergie spécifique globale E_{S} en fonction du débit de production D, obtenue à partir de résultats expérimentaux.

La courbe supérieure C1 correspond à la technique classique dans laquelle on ne modifie pas le cycle. Dans ce cas, l'énergie spécifique E_{S} passe de 100 pour D = 100% (c'est-à-dire pour la pression nominale) à 112 pour D = 75% et à 135 pour D = 50%.

La courbe inférieure C2 correspond à la mise en oeuvre de l'invention.

Avec la modification du cycle suivant la Figure 4, Eₛ passe à 98 pour D = 85%. Pour les valeurs plus faibles de D, on adopte la variante de la Figure 6, et on obtient E_{S} = 104 pour D = 75% et E_{S} = 126 pour D = 50%.

On notera que les valeurs de la Figure 7 sont indicatives. Les valeurs obtenues dépendent en particulier de la consommation des machines pendant la marche à vide, qui dépend elle-même des pertes de charge des circuits d'alimentation et de refoulement, des caractéristiques des machines, etc.

Comme on le comprend, l'unité de production d'oxygène peut être pilotée par un automate programmable de manière à modifier le cycle de l'une des manières décrites ci-dessus en fonction de la demande d'oxygène sur la conduite de production 9.

Dans certains cas, les cycles décrits plus haut peuvent être mis en oeuvre avec un nombre d'adsorbeurs supérieur à 2, en particulier dans le cas d'installations de grande capacité.

## Revendications

1. Procédé de traitement d'un mélange gazeux comprenant une réduction du débit de production temporaire, par adsorption à variation de pression, du type dans lequel on utilise au moins un adsorbeur, dans lequel on effectue, pour une production nominale donnée, un cycle comprenant les étapes successives suivantes :
- une phase de production par circulation du mélange dans l'adsorbeur dans un sens dit co-courant et récupération d'une fraction enrichie en composés les moins adsorbables, phase au cours de laquelle la pression maximale PM du cycle est atteinte,
- une phase de régénération, comportant au moins une étape de dépressurisation au cours de laquelle est atteinte la pression minimale Pm du cycle, et
- une phase de repressurisation de l'adsorbeur jusqu'à la pression initiale de la phase de production,
**caractérisé en ce que**, lors de cette réduction du débit de production, on abaisse la pression maximale PM et on réduit le rapport PM/Pm.

2. Procédé suivant la revendication 1, **caractérisé en ce que**, lors de cette réduction du débit de production, on diminue la durée d'une étape de recompression finale (a2) de l'adsorbeur avec le mélange de façon à diminuer la pression PM.

3. Procédé suivant la revendication 1 ou 2, **caractérisé en ce que**, lors de cette réduction du débit de production, on diminue la durée de l'étape de dépressurisation de façon à remonter la pression Pm.

4. Procédé suivant la revendication 2 ou 3, **caractérisé en ce que**, lors de cette réduction du débit de production, on maintient inchangées les durées des autres étapes du cycle.

5. Procédé suivant la revendication 2 ou 3, **caractérisé en ce que**, lors de cette réduction du débit de production, on allonge la durée d'une étape (a1) de première recompression à contre-courant de la phase de repressurisation et/ou la durée d'une étape (c1) de première décompression à co-courant de la phase de régénération.

6. Procédé suivant la revendication 5, utilisant au moins deux adsorbeurs, **caractérisé en ce que**, lors de cette réduction du débit de production, on allonge la durée de l'étape (a1) de première recompression à contre-courant et celle de l'étape (c1) de première décompression à co-courant, qui sont deux étapes concomitantes assurant un équilibrage total ou partiel de pressions entre deux adsorbeurs.

7. Procédé suivant l'une quelconques des revendications 1 à 6, **caractérisé en ce que**, lors de cette réduction du débit de production, on ajoute au cycle au moins un temps mort (t1, t'1 ; t4, t'4) au cours duquel l'adsorbeur (1A, 1B) est isolé.

8. Procédé suivant la revendication 7, **caractérisé en ce qu'**on aménage le temps mort après une étape (a1) de première recompression à co-courant de la phase de repressurisation, et/ou après une étape (c1) de première décompression à co-courant de la phase de régénération.

9. Procédé suivant l'une quelconque des revendications 1 à 8, **caractérisé en ce que** le cycle comprend successivement, au cours de la phase de régénération, une étape (c1) de première décompression à co-courant, une étape (c2) de deuxième décompression à contre-courant, et une étape (c3) d'élution à contre-courant par du gaz de production.

10. Procédé selon l'une des revendications précédentes, **caractérisé en ce que** le mélange gazeux à traiter est de l'air.

11. Procédé selon la revendication 10, **caractérisé en ce que** le gaz de production est de l'oxygène dont la pureté est sensiblement la même pour le débit nominal de production et pour le débit réduit de production.

12. Procédé selon la revendication 10 ou la revendication 11, **caractérisé en ce que** la pression maximale de cycle PM est sensiblement supérieure à la pression atmosphérique, notamment comprise entre 1,2 et 2 bars et plus particulièrement entre 1,35 et 1,65 bars, et la pression minimale de cyde Pm est comprise dans la plage 0,20 à 0,65 bars et plus particulièrement dans la plage 0,3 à 0,45 bars abs.

## Claims

1. Method of treating a gas mixture, comprising a temporary reduction in the production output by pressure-swing adsorption, of the type in which at least one adsorber is used in which, for a given nominal production, a cycle comprising the following successive steps is carried out:
- a production phase by the mixture flowing into the adsorber in a direction called the cocurrent direction and recovery of a fraction enriched with the least adsorbable compounds, during which phase the maximum pressure PM of the cycle is reached;
- a regeneration phase, including at least one depressurization step in which the minimum pressure Pm of the cycle is reached; and
- a repressurization phase, in which the adsorber is brought up to the initial pressure of the production phase;
**characterized in that**, during this reduction in the production output, the maximum pressure PM is lowered and the PM/Pm ratio is reduced.

2. Method according to Claim 1, **characterized in that**, during this reduction in the production output, the duration of a final step (a2) of recompressing the adsorber with the mixture is reduced so as to lower the pressure PM.

3. Method according to Claim 1 or 2, **characterized in that**, during this reduction in the production output, the duration of the depressurization step is reduced so as to raise the pressure Pm.

4. Method according to Claim 2 or 3, **characterized in that**, during this reduction in the production output, the durations of the other steps of the cycle remain unchanged.

5. Method according to Claim 2 or 3, **characterized in that**, during this reduction in the production output, the duration of a step (a1) of countercurrent first recompression of the repressurization phase and/or the duration of a step (c1) of cocurrent first decompression of the regeneration phase is/are extended.

6. Method according to Claim 5, using at least two adsorbers, **characterized in that**, during this reduction in the production output, the duration of the step (a1) of countercurrent first recompression and that of the step (c1) of cocurrent first decompression, which are two concomitant steps ensuring total or partial pressure balancing between two adsorbers, are extended.

7. Method according to any one of Claims 1 to 6, **characterized in that**, during this reduction in the production output, at least one dead time (t1, t'1; t4, t'4), during which the adsorber (1A, 1B) is isolated, is added to the cycle.

8. Method according to Claim 7, **characterized in that** the dead time is arranged after a step (a1) of cocurrent first recompression of the repressurization phase and/or after a step (c1) of cocurrent first decompression of the regeneration phase.

9. Method according to any one of Claims 1 to 8, **characterized in that** the cycle includes, in succession during the regeneration phase, a step (c1) of cocurrent first decompression, a step (c2) of countercurrent second decompression and a step (c3) of countercurrent elution by production gas.

10. Method according to one of the preceding claims, **characterized in that** the gas mixture to be treated is air.

11. Method according to Claim 10, **characterized in that** the production gas is oxygen, the purity of which is substantially the same for the nominal production output and for the reduced production output.

12. Method according to Claim 10 or Claim 11, **characterized in that** the maximum cycle pressure PM is substantially greater than atmospheric pressure, especially between 1.2 and 2 bar and more particularly between 1.35 and 1.65 bar, and the minimum cycle pressure Pm lies within the 0.20 to 0.65 bar range and more particularly within the 0.3 to 0.45 bar abs range.

## Patentansprüche

1. Verfahren zur Behandlung eines Gasgemischs, das eine vorübergehende Reduzierung der Produktionsleistung durch Adsorption bei variablem Druck umfasst, bei dem man mindestens einen Adsorber verwendet, in dem für eine gegebene nominale Produktion ein Zyklus ausgeführt wird, der nacheinander die folgenden Schritte umfasst:
- eine Produktionsphase durch Zirkulation des Gemischs im Adsorber in einem so genannten Gleichstrom und Rückgewinnung eines Bruchteils, der mit den am wenigsten adsorbierbaren Verbindungen angereichert ist, wobei während dieser Phase der maximale Zyklusdruck PM erreicht wird,
- eine Regenerierungsphase, die mindestens einen Druckerniedrigungsschritt umfasst, in dessen Verlauf der minimale Zyklusdruck Pm erreicht wird, und
- eine Druckerhöhungsphase des Adsorbers auf den Ausgangsdruck der Produktionsphase,
**dadurch gekennzeichnet, dass** während dieser Reduzierung der Produktionsleistung der Maximaldruck PM gesenkt wird und das Verhältnis PM/Pm reduziert wird.

2. Verfahren nach Anspruch 1, **dadurch gekennzeichnet, dass** während dieser Reduzierung der Produktionsleistung die Dauer eines letzten Rekompressionsschritts (a2) des Adsorbers mit dem Gemisch so verkürzt wird, dass der Druck PM abnimmt.

3. Verfahren nach Anspruch 1 oder 2, **dadurch gekennzeichnet, dass** während dieser Reduzierung der Produktionsleistung die Dauer des Druckerniedrigungsschritts so verkürzt wird, dass der Druck Pm wieder steigt.

4. Verfahren nach Anspruch 2 oder 3, **dadurch gekennzeichnet, dass** während dieser Reduzierung der Produktionsleistung die jeweilige Dauer der anderen Schritte des Zyklus unverändert bleibt.

5. Verfahren nach Anspruch 2 oder 3, **dadurch gekennzeichnet, dass** während dieser Reduzierung der Produktionsleistung die Dauer eines ersten Gegenstrom-Rekompressionsschritts (a1) der Druckerhöhungsphase und/oder die Dauer eines ersten Gleichstrom-Dekompressionsschritts (c1) der Regenerierungsphase verlängert wird.

6. Verfahren nach Anspruch 5, bei dem mindestens zwei Adsorber verwendet werden, **dadurch gekennzeichnet, dass** während dieser Reduzierung der Produktionsleistung die Dauer des ersten Gegenstrom-Rekompressionsschritts (a1) und die des ersten Gleichstrom-Dekompressionsschritts (c1), bei denen es sich um gleichzeitige Schritte handelt, durch die das Gleichgewicht der Drücke zwischen zwei Adsorbern vollkommen oder teilweise sichergestellt wird, verlängert wird.

7. Verfahren nach einem der Ansprüche 1 bis 6, **dadurch gekennzeichnet, dass** während dieser Reduzierung der Produktionsleistung mindestens eine Totzeit (t1, t'1; t4, t'4) zum Zyklus hinzugefügt wird, in deren Verlauf der Adsorber (1A, 1B) isoliert ist.

8. Verfahren nach Anspruch 7, **dadurch gekennzeichnet, dass** die Totzeit nach einem ersten Gleichstrom-Rekompressionsschritt (a1) der Druckerhöhungsphase und/oder nach einem ersten Gleichstrom-Dekompressionsschritt (c1) der Regenerierungsphase eingelegt wird.

9. Verfahren nach einem der Ansprüche 1 bis 8, **dadurch gekennzeichnet, dass** der Zyklus nacheinander während der Regenerierungsphase einen ersten Gleichstrom-Dekompressionsschritt (c1), einen zweiten Gegenstrom-Dekompressionsschritt (c2) und einen Gegenstrom-Elutionsschritt (c3) durch Produktionsgas umfasst.

10. Verfahren nach einem der vorhergehenden Ansprüche, **dadurch gekennzeichnet, dass** das Gasgemisch, das behandelt werden soll, Luft ist.

11. Verfahren nach Anspruch 10, **dadurch gekennzeichnet, dass** das Produktionsgas Sauerstoff ist, dessen Reinheit für die nominale Produktionsleistung und für die reduzierte Produktionsleistung im Wesentlichen dieselbe ist.

12. Verfahren nach Anspruch 10 oder 11, **dadurch gekennzeichnet, dass** der maximale Zyklusdruck PM im Wesentlichen über dem atmosphärischen Druck liegt, genauer gesagt im Bereich zwischen 1,2 und 2 bar und insbesondere zwischen 1,35 und 1,65 bar, und dass der minimale Zyklusdruck Pm im Bereich zwischen 0,20 und 0,65 bar und insbesondere im Bereich zwischen 0,3 und 0,45 bar abs. liegt.
